# FASCICULE DE BREVET EUROPEEN

(11) **EP 1 907 264 B1**
(45) Date de publication et mention de la délivrance du brevet: **17.06.2009**
(21) Numéro de dépôt: 06779031.1
(22) Date de dépôt: 10.07.2006
(51) Int. Cl.: B62D 21/15

(54) **STRUCTURE SUPPORT D'UN TRAIN AVANT DE VEHICULE AUTOMOBILE COMPRENANT DES MOYENS D'ACCOUPLEMENT SOUS FORME D'UN CORPS CREUX D'UN MINI-BERCEAU AUX LONGERONS, ET VEHICULE CORRESPONDANT**
EIN VORDERES KRAFTFAHRZEUGFAHRGESTELL STÜTZENDE STRUKTUR MIT VERBINDUNGSMITTELN IN FORM EINES HOHLKÖRPERS EINES MINI-TRÄGERS MIT SEITENGLIEDERN UND ENTSPRECHENDES FAHRZEUG
STRUCTURE SUPPORTING A MOTOR VEHICLE FRONT END ASSEMBLY COMPRISING COUPLING MEANS IN THE FORM OF A HOLLOW BODY OF A MINI-CRADLE WITH SIDE MEMBERS, AND CORRESPONDING VEHICLE

(30) Priorité: 18.07.2005 FR 0507623
(43) Date de publication de la demande: 09.04.2008
(73) Titulaire: Auto Chassis International SNC, 72086 Le Mans Cédex 9 (FR)
(72) Inventeur: CARIOU, Anthony, F-72000 Le Mans (FR); BERSON, Julien, F-72000 Le Mans (FR); TOUFFAIT, Joel, F-72230 Ruaudin (FR); VENEAU, Jean, F-72370 Ardenay Sur Merize (FR)
(74) Mandataire: Guyon, Rodolphe C.
(86) Numéro de dépôt international: PCT/FR2006/050692
(87) Numéro de publication internationale: WO 2007/010157

(56) Documents cités:
- US-A- 5 685 599
- US-A1- 2001 020 774
- US-A1- 2001 022 437

## Description

Le domaine de l'invention est celui de l'industrie automobile. Plus précisément, l'invention concerne les berceaux supportant les moteurs de véhicules automobiles ou les trains arrières.

Selon une technique courante, les berceaux de moteur comprennent deux coquilles réalisées en tôle emboutie et assemblées entre elles, par exemple par soudage.

L'une des fonctions de ces berceaux est de supporter les efforts engendrés par le couple moteur lors de phases d'accélération ou de décélération du véhicule.

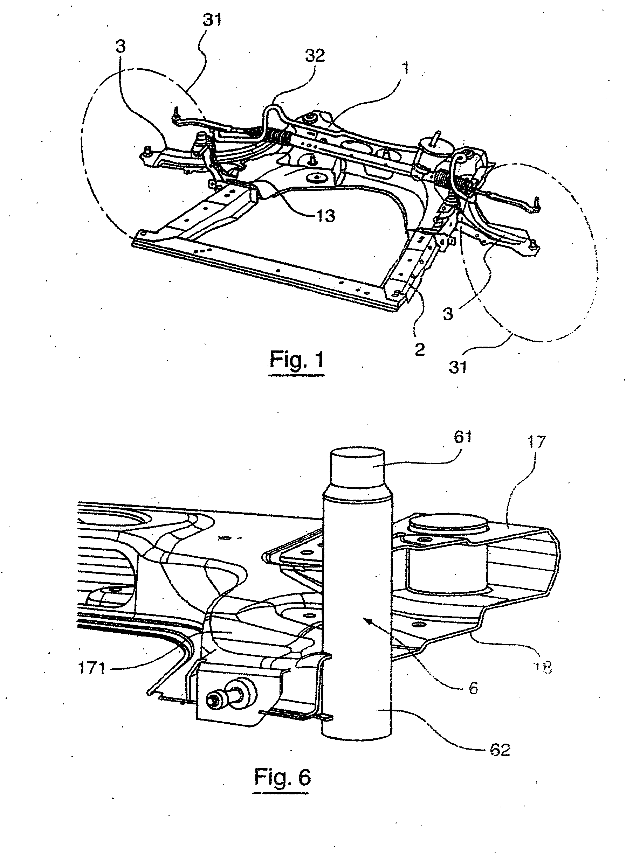

On rappelle, en référence à la figure 1, qu'un tel berceau est solidarisé à la caisse du véhicule en partie arrière. Dans le prolongement du berceau est placé un absorbeur de chocs 2 ou « add-on » indépendant du berceau et sans contact avec celui-ci, sauf en cas de choc.

En outre, un tel berceau est couplé à des bras inférieurs 3 supports de roue ou portant des moyens supports de roue 31 (représentés symboliquement), une barre anti-dévers 32 reliant ces bras et étant maintenue sur le berceau.

Un tel berceau moteur est donc une structure intermédiaire entre la caisse et les organes de guidage du train avant.

Un berceau de ce type se termine vers l'avant environ au niveau de l'axe des roues, ce qui lui vaut le qualificatif de « mini-berceau », par opposition à un berceau cadre qui s'étend jusqu'à la traverse extrême avant, derrière le pare-chocs.

Ces mini-berceaux facilitent la préparation au montage en usine de carrosserie montage (UCM) puisqu'on peut les préparer hors chaîne avec l'assemblage de la direction de la barre anti-dévers, de la biellette de reprise de couple, des triangles de suspension, ceci avant l'accouplement final avec la caisse.

Un ensemble avant ainsi réalisé est très compact.

En fonctionnement, il doit laisser débattre les éléments mobiles environnants comme : les bras de suspension (points A, B, E), les biellettes de direction, les transmissions latérales de la barre anti-dévers.

La fonction absorption d'énergie en choc des mini-berceaux impose deux dimensionnements importants de ces organes.

En premier lieu, le mini-berceau doit résister aux efforts venant de la structure avant déformable (add-on) pendant le choc frontal, ces efforts étant principalement orientés dans la direction X du véhicule. Le trajet d'effort va donc imposer des formes et des sections dimensionnées pour « absorber » son écrasement programmé.

Parallèlement, le bras de suspension demande aussi une tenue à la ruine telle qu'il ne devienne fusible qu'à partir d'un niveau de chargement dicté par des critères de sécurité bien définis. De fait, il ne peut tolérer des sections trop faibles, mais encore il est impossible de pratiquer des trous de passage dans sa surface, notamment au droit du longeron avant, pour donner accès au vissage du berceau sur caisse en UCM.

D'autre part, le berceau est relié à la caisse en partie arrière par des plots élastiques pris en chape sous le plancher.

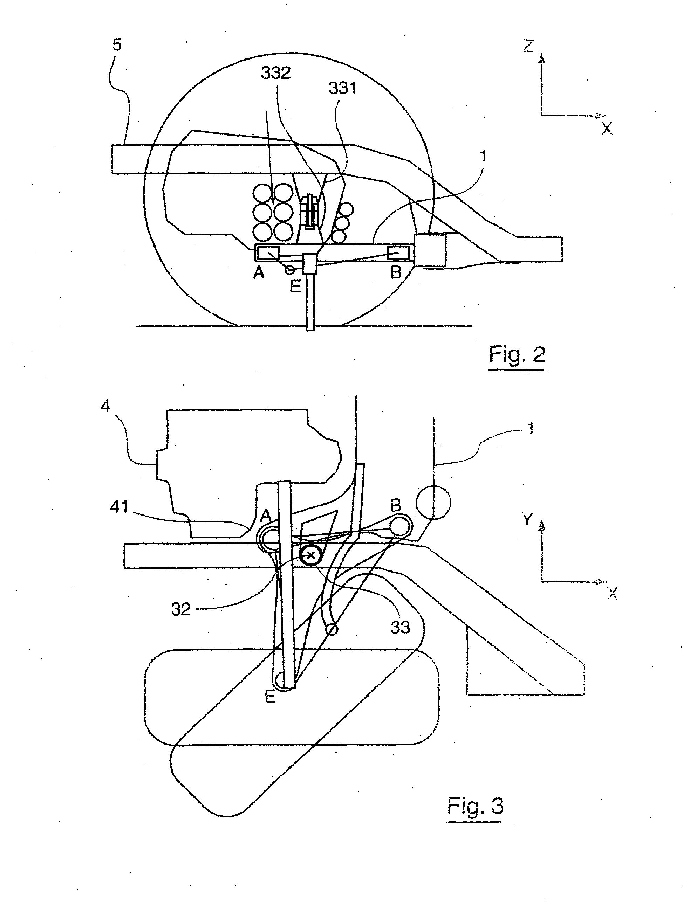

Dans sa partie antérieure, avec le contexte et les contraintes énumérées ci-dessus, la fixation ne peut se faire qu'en avant de l'articulation A du bras sur le berceau (un tel bras apparaissant sur les figures 2 et 3).

De plus, les cahiers des charges constructeur demandent que cette fixation soit réalisée par un plot de filtration situé juste au-dessous du longeron.

La fixation avant est donc très décalée dans la direction Z du plan horizontal (à environ 250 mm de la zone du point A).

Dans cet espace, particulièrement du côté gauche à cause de la proéminence du « nez » 41 de boîte de vitesses 4, la conception de la fixation en avant de la transmission, dans le respect du cahier des charges de raideur, s'avère particulièrement difficile. On note que les cahiers des charges actuels imposent, pour donner la rigidité transversale du train, une raideur Ky au point repéré 32 de 100 daN/mm. Une telle valeur de raideur nécessite de concevoir, dans un espace très confiné, une fixation verticale du plot 33 très «aérienne », mais suffisamment raide pour répondre au cahier des charges.

Différentes topologies d'implantation de la fixation du mini-berceau aux longerons avants ont été proposées par l'art antérieur.

Selon une première technique connue, la liaison est obtenue par une biellette articulée reliant le berceau au longeron, équipée d'articulations élastiques à chaque extrémité. Une telle solution est mise en oeuvre dans la Renault Megane (marque déposée).

Cette solution pénalise le montage de l'ensemble car les points d'assemblages sont nombreux (haut et bas).

De plus, une biellette disposée verticalement articulée à chaque extrémité ne peut développer une quelconque raideur transversale et ne répond donc pas au cahier des charges cité plus haut (100 daN/mm).

Une autre solution illustrée par les figures 2 et 3 consiste à diviser le chemin à parcourir entre le longeron 5 et le berceau 1 par deux. Une première structure 331 soudée au longeron 5 descend à mi-hauteur, alors qu'une autre structure 332 venant du berceau 1 monte à sa rencontre. Une telle solution est mise en oeuvre par Mitsubishi et Volvo (marques déposées).

La fixation entre les deux éléments est obtenue par liaison rigide (vissage) ou par plots élastiques.

Là encore, la liaison ne se fait pas à la bonne hauteur car aucune structure « descendante » n'est admise, la totalité du décalage vertical devant provenir du berceau.

On connaît également des solutions de structure soudée au berceau, encore appelée « corne », qui de forme emboutie ou réalisée en tube cintré rattrapent le décalage en Z, et surtout en Y, entre la partie basse du berceau, et la partie haute de liaison au longeron. Cette solution est mise en oeuvre par BMW mini et sur Ford Fiesta (marques déposées).

Ce décalage en Y n'est pas possible dans certaines applications, notamment lorsque dans une section X, cela engendre une interférence avec la boîte de vitesse.

Voir à ce sujet le document US2001/0022437 pris à base du préambule de la revendication 1.

L'invention a notamment pour objectif de pallier les inconvénients de l'art antérieur.

Plus précisément, l'invention a pour objectif de proposer une technique de fixation d'un mini-berceau à un longeron qui assure à la fixation une grande rigidité, ceci dans un espace confiné, tout en permettant le passage des moyens de vissage destinés à participer à la fixation.

L'invention a également un objectif de fournir une telle technique qui préserve la rigidité des bras de suspension, notamment en ce qu'elle évite de percer ceux-ci.

L'invention a aussi pour objectif de fournir une telle technique qui permette de réaliser la fixation en avant du point A des bras de suspension portés pour le mini-berceau.

Un autre objectif de l'invention est de fournir une telle technique qui confère une raideur transversale satisfaisante à la fixation.

Encore un autre objectif de l'invention est de fournir une telle technique qui permette d'assurer un rattrapage du décalage vertical entre le mini-berceau et les longerons, essentiellement du fait du mini-berceau.

Encore un autre objectif de l'invention est de.fournir une telle technique qui permette la proximité immédiate d'une boîte de vitesse par rapport au mini-berceau.

Encore un autre objectif de l'invention est de fournir une telle technique qui autorise la mise en oeuvre d'articulations élastiques entre le mini-berceau et les longerons.

L'invention a encore pour objectif de fournir une telle technique qui soit simple de conception et facile à mettre en oeuvre.

Ces objectifs, ainsi que d'autres qui apparaîtront par la suite, sont atteints grâce à l'invention qui a pour objet une structure support d'un train avant de véhicule automobile, comprenant un mini-berceau sur lequel est monté un bras de suspension pour chaque roue dudit train avant, ledit bras de suspension étant du type présentant une forme de boomerang dont l'une des extrémités, dite extrémité support (E) d'une partie tournante est destinée à être couplée à une roue, l'autre extrémité, dite articulation avant (A), et la partie médiane du bras, dite articulation arrière (B), étant destinées à être couplées audit mini-berceau, ledit mini-berceau présentant un corps de part et d'autre duquel s'étendent vers l'avant du véhicule deux brancards destinés chacun à être couplés par vissage à un longeron dudit véhicule, caractérisé en ce que chacun desdits brancards présente des moyens d'accouplement audit longeron dans une zone située en avant, par rapport à l'axe longitudinal dudit véhicule, dudit point A dudit bras de suspension, lesdits moyens d'accouplement comprenant au moins un corps creux permettant le passage de moyens de vissage en vue d'accoupler ledit brancard audit longeron.

Une telle conception de structure avant de fixation présente un encombrement limité dans les directions X et Y du véhicule, ceci tout en permettant l'accès, pour des moyens de vissage, à la liaison vissée entre le mini-berceau et les longerons.

En outre, une telle technique de fixation peut être mise en oeuvre en avant du point A des bras de suspension et évite donc le perçage de ceux-ci (pour le passage des moyens de fixation).

Selon une solution préférée, ledit ou lesdits corps creux sont constitués par au moins une pièce tubulaire s'étendant d'un seul tenant entre ledit longeron et ledit brancard.

Ainsi, l'encombrement de la fixation est réduit au seul diamètre extérieur de la pièce tubulaire.

En outre, une telle pièce assure l'obtention d'une raideur en flexion optimale, conformément au cahier des charges imposés par les constructeurs de véhicules automobiles.

Selon une solution avantageuse, ledit ou lesdits brancards présentent un logement dans lequel lesdits moyens d'accouplement sont encastrés.

Préférentiellement, ledit mini-berceau est du type bi-coquilles, au moins la coquille supérieure présentant au moins un orifice pour le passage de ladite ou desdites pièces tubulaires.

On assure de cette façon une liaison efficace entre la ou les pièces tubulaires et le mini-berceau.

Par ailleurs, un mini-berceau de ce type est parfaitement dimensionné pour absorber une grande partie des efforts en cas de choc frontal du véhicule.

Avantageusement, chacune des coquilles dudit mini-berceau présente au moins un orifice pour le passage de ladite ou desdites pièces tubulaires.

Dans ce cas, ladite ou lesdites pièces tubulaires sont préférentiellement soudées à chacune desdites coquilles.

Ceci contribue à la qualité de la liaison entre la ou les pièces tubulaires et le mini-berceau. Parallèlement, un tel agencement tend à augmenter la rigidité en flexion de la ou des pièces tubulaires.

Selon un mode de réalisation préféré, lesdits moyens d'accouplement comprennent au moins une articulation élastique.

Dans ce cas, ladite ou lesdites articulations élastiques sont préférentiellement emmanchées dans ledit corps desdits moyens d'accouplement.

On obtient de cette façon une bonne intégration des articulations élastiques, ceci sans augmenter l'encombrement de la fixation entre le mini-berceau et les longerons.

Préférentiellement, ladite ou lesdites pièces tubulaires présentent deux portions dans le prolongement l'une de l'autre, l'une desdites portions présentant un diamètre réduit par rapport à l'autre portion et étant destiné à recevoir ladite articulation à emmanchement.

Selon une autre caractéristique avantageuse, chacun desdits brancards s'étend au voisinage dudit longeron à partir d'un corps principal et présente une partie terminale incurvée en direction dudit longeron jusqu'à venir à la verticale dudit longeron.

Ainsi, le rattrapage du décalage entre le mini-berceau et les longerons est assuré par la structure du mini-berceau lui-même.

Ceci contribue à améliorer la rigidité transversale de la fixation, les moyens d'accouplement du mini-berceau aux longerons s'étendant sensiblement verticalement grâce à la structure du mini-berceau.

Dans ce cas, ledit point A dudit bras de suspension est avantageusement accouplé audit mini-bureau au niveau de ladite partie terminale incurvée.

Selon une solution préférée, ledit mini-berceau présente une réservation permettant le passage d'un nez de boîte de vitesse.

On peut de cette façon placer la boîte de vitesse et au moins l'une des fixations entre le mini-berceau et les longerons à proximité immédiate l'un de l'autre.

Dans ce cas, ladite réservation est préférentiellement ménagée au niveau de ladite partie terminale incurvée d'au moins un desdits brancards.

L'invention concerne également un véhicule automobile équipé d'une structure support d'un train avant, ladite structure support comprenant un mini-berceau sur lequel est monté un bras de suspension pour chaque roue dudit train avant, ledit bras de suspension étant du type présentant une forme de boomerang dont l'une des extrémités, dite extrémité support (E) d'une partie tournante est destinée à être couplée à une roue, l'autre extrémité, dite articulation avant (A), et la partie médiane du bras, dite articulation arrière (B), étant destinées à être couplées audit mini-berceau, ledit mini-berceau présentant un corps de part et d'autre duquel s'étendent vers l'avant du véhicule deux brancards destinés chacun à être couplés par vissage à un longeron dudit véhicule, caractérisé en ce que chacun desdits brancards présente des moyens d'accouplement audit longeron dans une zone située en avant, par rapport à l'axe longitudinal dudit véhicule, dudit point A dudit bras de suspension, lesdits moyens d'accouplement comprenant au moins un corps creux permettant le passage de moyens de vissage en vue d'accoupler ledit brancard audit longeron.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un berceau de véhicule automobile dans son environnement immédiat ;
- les figures 2 et 3 sont des vues schématiques d'une structure avant de fixation d'un mini-berceau selon l'art antérieur, respectivement de côté et de dessus ;
- les figures 4 et 5 sont des vues schématiques d'une structure avant de fixation d'un mini-berceau selon l'invention, respectivement de côté et de dessus ;
- la figure 6 est une vue en perspective de moyens d'accouplement d'un mini-berceau à un longeron selon l'invention.

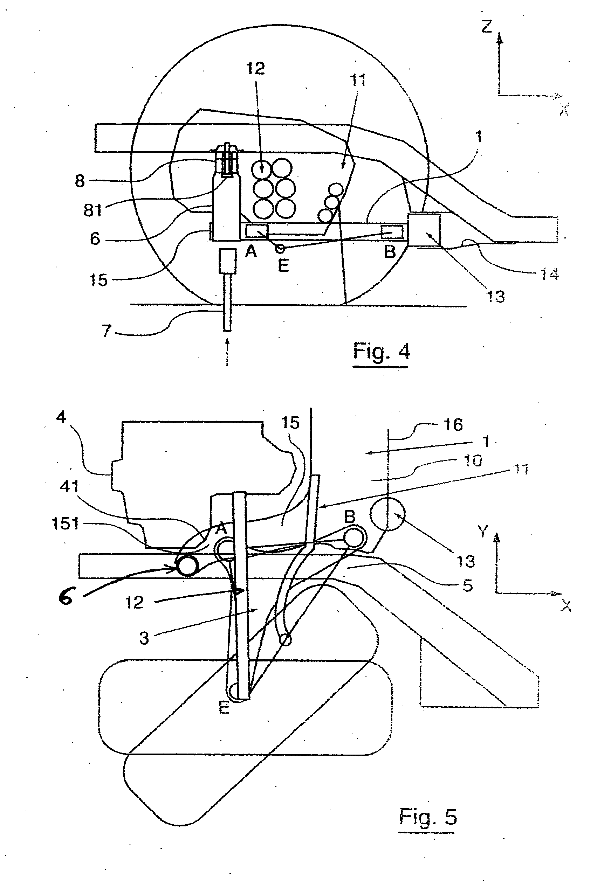

En référence aux figures 4 et 5, on rappelle qu'une structure avant intégrant un mini-berceau est destinée a être préparée hors chaîne, et comprend l'assemblage, avant accouplement avec la caisse du véhicule, de biellettes de direction 11 (différentes positions de biellettes étant représentées sur la figure 4), d'une barre anti-dévers (non représentée), de biellettes de reprises de couples (non représentée), de bras (ou triangles) de suspension 3.

On rappelle également que les bras de suspension sont classiquement de type boomerang, dont l'une des extrémités support d'une partie tournante (point E) est destiné à être couplé à une roue, et dont l'articulation avant (point A) et l'articulation arrière (point B) sont destinés à être couplés au mini-berceau 1.

L'assemblage des différents organes est réalisé de façon à laisser débattre les éléments mobiles environnants, comme les bras de suspension 3 (points A, B et E), les biellettes de direction 11, les transmissions latérales 12 (différentes positions d'une transmission étant représentées sur la figure 4) et la barre anti-dévers.

Le mini-bercecau 1 est ensuite relié à la caisse en partie arrière par des plots élastiques 13 pris en chape dans le plancher 14.

De plus, le mini-berceau doit être accouplé aux longerons 5 du véhicule.

Selon le principe de l'invention, les brancards 15 qui s'étendent à partir du corps principal 16 du mini-berceau en faisant corps avec celui-ci, présentent chacun des moyens d'accouplement 6 du mini-berceau aux longerons, sous forme d'un corps creux permettant le passage de moyens de vissage 7.

Ces moyens de vissage permettent d'exécuter le vissage de moyens de fixation du mini-berceau au longeron, ces moyens de fixation étant explicités plus en détail par la suite.

Selon le présent mode de réalisation, les moyens d'accouplement sont constitués par une pièce tubulaire 6 s'étendant d'un seul tenant entre un brancard du mini-berceau et le longeron 5 correspondant.

Tel qu'illustré par la figure 6, le mini-berceau est du type mécano-soudé et est réalisé en l'occurrence par l'assemblage d'une coquille supérieure 17 et d'une coquille inférieure 18 définissant ensemble une structure creuse de section fermée.

Tel que cela apparaît, chacune des coquilles 17, 18 du mini-berceau présente, à l'extrémité des brancards, un orifice pour le passage d'une pièce tubulaire 6, formant ainsi un logement dans lequel la pièce tubulaire 6 est encastrée.

La solidarisation de la pièce tubulaire 6 au mini-berceau est assurée par soudage de celle-ci à chacune des coquilles 17, 18.

En outre, la pièce tubulaire 6 présente deux portions 61, 62 dans le prolongement l'une de l'autre, la portion 61 destinée à être placée entre du côté du longeron présentant un diamètre inférieur à celui de la portion 62 encastrée dans le brancard du mini-berceau.

La portion 61 de moindre diamètre est destiné à recevoir à emmanchement une articulation élastique 8 d'axe vertical.

Lors du montage, les moyens de vissage 7 en usine de carrosserie-montage accèdent par l'intérieur de la pièce tubulaire 6 à la vis 81 qui bloque la bague intérieure de l'articulation élastique 8 à la face inférieure du longeron 5.

En référence à la figure 5, on remarque que les brancards 15 s'étendent à partir du corps principal 10 du mini-berceau en longeant sensiblement les longerons correspondants, et présentant une partie terminale 51 incurvée en direction du longeron 5 et se terminant sensiblement à la verticale du longeron 5.

On note que le point A du bras de suspension est accouplé au niveau de cette partie terminale 151 du brancard.

Par ailleurs, comme cela apparaît sur la figure 6, l'embouti de la coquille supérieure 17 du mini-berceau présente une réservation 171 ménageant un espace dans lequel vient s'inscrire le nez 41 de la boîte de vitesse 4.

Cette réservation est prévue au niveau de la partie terminale 151 d'un des brancards 15 du mini-berceau.

## Revendications

1. Structure support d'un train avant de véhicule automobile, comprenant un mini-berceau (1) sur lequel est monté un bras de suspension (3) pour chaque roue dudit train avant, ledit bras de suspension (3) étant du type présentant une forme de boomerang dont l'une des extrémités, dite extrémité support (E) d'une partie tournante est destinée à être couplée à une roue, l'autre extrémité, dite articulation avant (A), et la partie médiane du bras, dite articulation arrière (B), étant destinées à être couplées audit mini-berceau (1), ledit mini-berceau (1) présentant un corps (10) de part et d'autre duquel s'étendent vers l'avant du véhicule deux brancards (15) destinés chacun à être couplé par vissage à un longeron (5) dudit véhicule,
**caractérisé en ce que** chacun desdits brancards (15) présente des moyens d'accouplement (6) audit longeron (5) dans une zone située en avant, par rapport à l'axe longitudinal dudit véhicule, dudit point (A) dudit bras de suspension (3), lesdits moyens d'accouplement (6) comprenant au moins un corps creux permettant le passage de moyens de vissage (7) en vue d'accoupler ledit brancard (15) audit longeron (5).

2. Structure support d'un train avant selon la revendication 1, **caractérisée en ce que** ledit ou lesdits corps creux sont constitués par au moins une pièce tubulaire s'étendant d'un seul tenant entre ledit longeron (5) et ledit brancard (15).

3. Structure support d'un train avant selon l'une des revendications 1 et 2, **caractérisée en ce que** ledit ou lesdits brancards (15) présentent un logement dans lequel lesdits moyens d'accouplement (6) sont encastrés.

4. Structure support d'un train avant selon les revendications 2 et 3, **caractérisée en ce que** ledit mini-berceau (1) est du type bi-coquilles, au moins la coquille supérieure (17) présentant au moins un orifice pour le passage de ladite ou desdites pièces tubulaires.

5. Structure support d'un train avant selon la revendication 4, **caractérisée en ce que** chacune des coquilles (17), (18) dudit mini-berceau (1) présente au moins un orifice pour le passage de ladite ou desdites pièces tubulaires.

6. Structure support d'un train avant selon la revendication 5, **caractérisée en ce que** ladite ou lesdites pièces tubulaires sont soudées à chacune desdites coquilles (17), (18).

7. Structure support d'un train avant selon l'une quelconque des revendications 1 à 6, **caractérisée en ce que** lesdits moyens d'accouplement (6) comprennent au moins une articulation élastique (8).

8. Structure support d'un train avant selon la revendication 7, **caractérisée en ce que** ladite ou lesdites articulations élastiques (8) sont emmanchées dans ledit corps desdits moyens d'accouplement (6).

9. Structure support d'un train avant selon les revendications 2 et 7, **caractérisée en ce que** ladite ou lesdites pièces tubulaires présentent deux portions (61,) (62) dans le prolongement l'une de l'autre, l'une desdites portions présentant un diamètre réduit par rapport à l'autre portion (62) et étant destiné à recevoir ladite articulation (8) à emmanchement.

10. Structure support d'un train avant selon l'une quelconque des revendications 1 à 9, **caractérisée en ce que** chacun desdits brancards (15) s'étend au voisinage dudit longeron à partir d'un corps principal (5) et présente une partie terminale incurvée (151) en direction dudit longeron (5) jusqu'à venir à la verticale dudit longeron (5).

11. Structure support d'un train avant selon la revendication 10, **caractérisée en ce que** ledit point (A) dudit bras de suspension (3) est accouplé audit mini-berceau (1) au niveau de ladite partie terminale incurvée (151).

12. Structure support d'un train avant selon l'une quelconque des revendications 1 à 11, **caractérisée en ce que** ledit mini-berceau (1) présente une réservation (171) permettant le passage d'un nez (41) de boîte de vitesse (4).

13. Structure support d'un train avant selon les revendications 10 et 12, **caractérisée en ce que** ladite réservation (171) est ménagée au niveau de ladite partie terminale incurvée (151) d'au moins un desdits brancards (15).

14. Véhicule automobile équipé d'une structure support d'un train avant, ladite structure support comprenant un mini-berceau (1) sur lequel est monté un bras de suspension (3) pour chaque roue dudit train avant, ledit bras de suspension (3) étant du type présentant une forme de boomerang dont l'une des extrémités, dite extrémité support (E) d'une partie tournante est destinée à être couplée à une roue, l'autre extrémité, dite articulation avant (A), et la partie médiane du bras, dite articulation arrière (B), étant destinées à être couplées audit mini-berceau (1), ledit mini-berceau (1) présentant un corps (10) de part et d'autre duquel s'étendent vers l'avant du véhicule deux brancards (15) destinés chacun à être couplé par vissage à un longeron (5) dudit véhicule, **caractérisé en ce que** chacun desdits brancards (15) présente des moyens d'accouplement (6) audit longeron (5) dans une zone située en avant, par rapport à l'axe longitudinal dudit véhicule, dudit point (A) dudit bras de suspension (3), lesdits moyens d'accouplement (6) comprenant au moins un corps (10) creux permettant le passage de moyens de vissage (7) en vue d'accoupler ledit brancard (15) audit longeron (5).

## Claims

1. Structure supporting a motor vehicle front end assembly, comprising a short subframe (1) on which a suspension arm (3) is mounted for each wheel of said front end, said suspension arm (3) being of the boomerang-shaped type in which one end, called the support end (E) of a rotating part, is intended to be coupled to a wheel, while the other end, called the front joint (A), and the median part of the arm, called the rear joint (B), are intended to be coupled to said short subframe (1), said short subframe (1) having a body (10) on either side of which there extend toward the front of the vehicle two rails (15), each intended to be coupled by screwing to a side member (5) of said vehicle,
**characterized in that** each of said rails (15) has means (6) for coupling to said side member (5) in an area located in front of said point A of said suspension arm (3) with respect to the longitudinal axis of said vehicle, said coupling means (6) comprising at least one hollow body for the passage of screwing means (7) for the purpose of coupling said rail (15) to said side member (5).

2. Structure supporting a front end assembly according to Claim 1, **characterized in that** said hollow body or bodies are composed of at least one tubular part extending in one piece between said side member (5) and said rail (15).

3. Structure supporting a front end assembly according to either of Claims 1 and 2, **characterized in that** said rail or rails (15) have a housing in which said coupling means (6) are inserted.

4. Structure supporting a front end assembly according to Claims 2 and 3, **characterized in that** said short subframe (1) is of the double shell type, at least the upper shell (17) having at least one hole for the passage of said tubular part or parts.

5. Structure supporting a front end assembly according to Claim 4, **characterized in that** each of the shells (17), (18) of said short subframe (1) has at least one hole for the passage of said tubular part or parts.

6. Structure supporting a front end assembly according to Claim 5, **characterized in that** said tubular part or parts are welded to each of said shells (17), (18).

7. Structure supporting a front end assembly according to any one of Claims 1 to 6, **characterized in that** said coupling means (6) comprise at least one resilient joint (8).

8. Structure supporting a front end assembly according to Claim 7, **characterized in that** said resilient joint or joints (8) are force-fitted into said body of said coupling means (6).

9. Structure supporting a front end assembly according to Claims 2 and 7, **characterized in that** said tubular part or parts have two portions (61), (62), each in the extension of the other, one of said portions having a smaller diameter than the other portion (62) and being intended to receive said joint (8) by force fitting.

10. Structure supporting a front end assembly according to any one of Claims 1 to 9, **characterized in that** each of said rails (15) extends in the vicinity of said side member from a main body (5) and has a terminal part (151) curved toward said side member (5) until it is in vertical alignment with said side member (5).

11. Structure supporting a front end assembly according to Claim 10, **characterized in that** said point A of said suspension arm (3) is coupled to said short subframe (1) in said curved terminal part (151).

12. Structure supporting a front end assembly according to any one of Claims 1 to 11, **characterized in that** said short subframe (1) has a recess (171) allowing the passage of a nose (41) of a gearbox (4).

13. Structure supporting a front end assembly according to Claims 10 and 12, **characterized in that** said recess (171) is formed in said curved terminal part (151) of at least one of said rails (15).

14. Motor vehicle equipped with a structure supporting a front end assembly, said support structure comprising a short subframe (1) on which a suspension arm (3) is mounted for each wheel of said front end, said suspension arm (3) being of the boomerang-shaped type in which one end, called the support end (E) of a rotating part, is intended to be coupled to a wheel, while the other end, called the front joint (A), and the median part of the arm, called the rear joint (B) are intended to be coupled to said short subframe (1), said short subframe (1) having a body (10) on either side of which there extend toward the front of the vehicle two rails (15), each intended to be coupled by screwing to a side member (5) of said vehicle, **characterized in that** each of said rails (15) has means (6) for coupling to said side member (5) in an area located in front of said point A of said suspension arm (3) with respect to the longitudinal axis of said vehicle, said coupling means (6) comprising at least one hollow body (10) for the passage of screwing means (7) for the purpose of coupling said rail (15) to said side member (5).

## Patentansprüche

1. Tragstruktur für eine Kraftfahrzeug-Vorderachse, mit einem Unterrahmen (1), an dem ein Aufhängungslenker (3) für jedes Rad der Vorderachse angebracht ist, wobei der Aufhängungslenker (3) von dem Typ ist, der eine Bumerang-Form aufweist, wovon eines der Enden, das so genannte Trägerende (E) für ein rotierendes Teil, dazu bestimmt ist, mit einem Rad gekoppelt zu werden, und das andere Ende, das vorderes Gelenk (A) genannt wird, sowie der Mittelteil des Lenkers, der hinteres Gelenk (B) genannt wird, dazu vorgesehen sind, mit dem Unterrahmen (1) gekoppelt zu werden, wobei der Unterrahmen (1) einen Körper (10) aufweist, von dessen beiden Seiten sich zur Vorderseite des Fahrzeugs zwei Unterrahmenlängsträger (15) erstrecken, die jeweils dazu vorgesehen sind, durch Verschrauben mit einem Rahmenlängsträger (5) des Fahrzeugs gekoppelt zu werden,
**dadurch gekennzeichnet, dass** jeder Unterrahmenlängsträger (15) in einer Zone, die sich in Bezug auf die Längsachse des Fahrzeugs vor dem Punkt (A) des Aufhängungslenkers (3) befindet, Mittel (6) für die Kopplung mit dem Rahmenlängsträger (5) aufweist, wobei die Kopplungsmittel (6) wenigstens einen Hohlkörper aufweisen, der den Durchgang von Verschraubungsmitteln (7) ermöglicht, um den Unterrahmenlängsträger (15) mit dem Rahmenlängsträger (5) zu koppeln.

2. Tragstruktur für eine Vorderachse nach Anspruch 1, **dadurch gekennzeichnet, dass** der oder die Hohlkörper durch wenigstens ein rohrförmiges Teil gebildet sind, das sich durchgehend zwischen dem Rahmenlängsträger (5) und dem Unterrahmenlängsträger (15) erstreckt.

3. Tragstruktur für eine Vorderachse nach einem der Ansprüche 1 und 2, **dadurch gekennzeichnet, dass** der oder die Unterrahmenlängsträger (15) einen Aufnahmesitz aufweisen, in den die Kopplungsmittel (6) eingesetzt sind.

4. Tragstruktur für eine Vorderachse nach den Ansprüchen 2 und 3, **dadurch gekennzeichnet, dass** der Unterrahmen (1) von Doppelschalentyp ist, wobei wenigstens die obere Schale (17) wenigstens eine Öffnung für den Durchgang des oder der rohrförmigen Teile aufweist.

5. Tragstruktur für eine Vorderachse nach Anspruch 4, **dadurch gekennzeichnet, dass** jede der Schalen (17), (18) des Unterrahmens (1) wenigstens eine Öffnung für den Durchgang des oder der rohrförmigen Teile aufweist.

6. Tragstruktur für eine Vorderachse nach Anspruch 5, **dadurch gekennzeichnet, dass** das oder die rohrförmigen Teile mit jeder der Schalen (17), (18) verschweißt sind.

7. Tragstruktur für eine Vorderachse nach einem der Ansprüche 1 bis 6, **dadurch gekennzeichnet, dass** die Kopplungsmittel (6) wenigstens ein elastisches Gelenk (8) aufweisen.

8. Tragstruktur für eine Vorderachse nach Anspruch 7, **dadurch gekennzeichnet, dass** das oder die elastischen Gelenke (8) in den Körper der Kopplungsmittel (6) gepresst sind.

9. Tragstruktur für eine Vorderachse nach den Ansprüchen 2 und 7, **dadurch gekennzeichnet, dass** das oder die rohrförmigen Teile zwei Abschnitte (61), (62) in gegenseitiger Verlängerung aufweisen, wobei einer der Abschnitte einen verringerten Durchmesser in Bezug auf den anderen Abschnitt (62) aufweist und dazu bestimmt ist, das Gelenk (8) durch Pressung aufzunehmen.

10. Tragstruktur für eine Vorderachse nach einem der Ansprüche 1 bis 9, **dadurch gekennzeichnet, dass** sich jeder der Unterrahmenlängsträger (15) in der Umgebung des Rahmenlängsträgers (5) ausgehend von einem Hauptkörper (5) erstreckt und einen Endabschnitt (151) aufweist, der in Richtung des Rahmenlängsträgers (5) nach innen gekrümmt ist, bis er die Vertikale des Rahmenlängsträgers (5) erreicht.

11. Tragstruktur für eine Vorderachse nach Anspruch 10, **dadurch gekennzeichnet, dass** der Punkt (A) des Aufhängungslenkers (3) mit dem Unterrahmen (1) auf Höhe des nach innen gekrümmten Endabschnitts (151) gekoppelt ist.

12. Tragstruktur für eine Vorderachse nach einem der Ansprüche 1 bis 11, **dadurch gekennzeichnet, dass** der Unterrahmen (1) einen freien Raum (171) aufweist, der den Durchgang einer Nase (41) des Getriebes (4) ermöglicht.

13. Tragstruktur für eine Vorderachse nach den Ansprüchen 10 und 12, **dadurch gekennzeichnet, dass** der freie Raum (171) auf Höhe des nach innen gekrümmten Endabschnitts (151) wenigstens eines der Unterrahmenlängsträger (15) ausgespart ist.

14. Kraftfahrzeug, das mit einer Tragstruktur für eine Vorderachse ausgerüstet ist, wobei die Tragstruktur einen Unterrahmen (1) aufweist, an dem ein Aufhängungslenker (3) für jedes Rad der Vorderachse angebracht ist, wobei der Aufhängungslenker (3) von dem Typ ist, der eine Bumerang-Form aufweist, wovon eines der Enden, das so genannte Trägerende (E) für ein rotierendes Teil, dazu vorgesehen ist, mit einem Rad gekoppelt zu werden, und das andere Ende, das vorderes Gelenk (A) genannt wird, sowie der Mittelabschnitt des Lenkers, der hinteres Gelenk (B) genannt wird, dazu vorgesehen sind, mit dem Unterrahmen (1) gekoppelt zu werden, wobei der Unterrahmen (1) einen Körper (10) aufweist, von dessen beiden Seiten sich zur Vorderseite des Fahrzeugs zwei Unterrahmenlängsträger (15) erstrecken, die jeweils dazu vorgesehen sind, durch Verschraubung mit einem Rahmenlängsträger (5) des Fahrzeugs gekoppelt zu werden, **dadurch gekennzeichnet, dass** jeder der Unterrahmenlängsträger (15) Mittel (6) zum Koppeln mit dem Rahmenlängsträger (5) in einer Zone, die sich in Bezug auf die Längsachse des Fahrzeugs vor dem Punkt (A) des Aufhängungslenkers (3) befindet, aufweist, wobei die Kopplungsmittel (6) wenigstens einen Hohlkörper (10) aufweisen, der den Durchgang der Verschraubungsmittel (7) ermöglicht, um den Unterrahmenlängsträger (15) mit dem Rahmenlängsträger (5) koppeln zu können.
